# EUROPEAN PATENT APPLICATION

(11) **EP 4 651 260 A1**
(43) Date of publication of application: **19.11.2025**
(21) Application number: 24198620.7
(22) Date of filing: 05.09.2024
(51) Int. Cl.: H01M 10/42, H01M 10/48, H02H 5/08

(54) **WATER INGRESS DETECTION CIRCUIT AND WATER INGRESS DETECTION METHOD**

(30) Priority: 15.05.2024 CN 202410601702
(71) Applicant: Shanghai Baicheng Electric Equipment Manufacture Co. Ltd., Shanghai 201806 (CN)
(72) Inventor: KUANG, Guofang, Waigang Town, Jiading District, Shanghai 201806 (CN)
(74) Representative: Ricker, Mathias

(57) **Abstract**

Provided are a water ingress detection circuit and a water ingress detection method. The water ingress detection circuit includes a waterproof detection terminal (1), a waterproof detection module (2), a switch module (3), a wake-up module (4) and a main control module (5). The switch module (3) is connected between the waterproof detection terminal and the waterproof detection module (2); the waterproof detection module (2) and the switch module (3) are further connected to the main control module (5). The battery pack includes a first electrode and a second electrode, the wake-up module (4) is connected to the first electrode or the second electrode of the battery pack, and the wake-up module (4) is connected to the main control module (5). According to the technical solutions provided in embodiments of the present invention, the main control module (5) controls an output circuit of the battery pack to be disconnected according to a second water ingress signal, so the current path between the first electrode and the second electrode of the battery pack is disconnected, which can avoid electrolytic corrosion of the first electrode and the second electrode of the battery pack.

## Description

### TECHNICAL FIELD

The present invention relates to the technical field of battery waterproof detection, in particular, to a water ingress detection circuit and a water ingress detection method.

### BACKGROUND

A battery pack is one of the core components of modern electric vehicles and portable electronic devices. Water entering the battery pack may cause safety problems such as battery damage, short circuits and even fire or explosion.

Battery packs are typically used in various environmental conditions, including humidity, heavy rain or the possibility of contact with water. The vast majority of battery packs on the current market are not waterproofed. When a battery pack falls into water, certain resistance of the water due to the generally impure nature of the water causes leakage or electrolysis, which leads to electrolytic corrosion of output contact terminals and output pins of the battery pack, affecting the performance and use of the battery pack and posing safety hazards. Therefore, it is necessary to check whether water enters the battery pack.

### SUMMARY

The present invention provides a water ingress detection circuit and a water ingress detection method to achieve water ingress detection on a battery pack.

According to another aspect of the present invention, a water ingress detection circuit is provided. The water ingress detection circuit includes a waterproof detection terminal, a waterproof detection module, a switch module, a wake-up module and a main control module.

The switch module is connected between the waterproof detection terminal and the waterproof detection module; the waterproof detection module and the switch module are further connected to the main control module.

The battery pack includes a first electrode and a second electrode, the wake-up module is connected to the first electrode or the second electrode of the battery pack, the wake-up module is connected to the main control module, and the wake-up module is configured to wake up the main control module according to a first water ingress signal of the first electrode or of the second electrode.

The main control module is configured to control the switch module to be turned on or turned off after being waked up; the waterproof detection module is configured to detect whether water enters the battery pack after the switch module is turned on and output a second water ingress signal after the water enters the battery pack; the main control module is further configured to control an output circuit of the battery pack to be disconnected according to the second water ingress signal.

Optionally, the waterproof detection module includes a voltage detection circuit, a voltage stabilization circuit and a filtering circuit; the voltage detection circuit includes a first resistor, a second resistor and a third resistor; the voltage stabilization circuit includes a Zener diode; the filtering circuit includes a fourth resistor and a first capacitor.

A first terminal of the first resistor is connected to a first terminal of the main control module, a second terminal of the first resistor is separately connected to a first terminal of the second resistor, a first electrode of the Zener diode and a first terminal of the third resistor, a second terminal of the second resistor is connected to a second terminal of the main control module, a second electrode of the Zener diode is grounded, a second terminal of the third resistor is separately connected to a first terminal of the fourth resistor and a first terminal of the first capacitor, the first terminal of the first capacitor is further connected to the switch module, and a second terminal of the fourth resistor and a second terminal of the first capacitor are each grounded.

Optionally, the switch module includes a first switch transistor.

A control electrode of the first switch transistor is connected to a third terminal of the main control module, a first electrode of the first switch transistor is connected to the waterproof detection terminal, and a second electrode of the first switch transistor is connected to the waterproof detection module.

Optionally, the water ingress detection circuit further includes a state indication module and a detection control module.

The state indication module is connected between the power supply and the main control module, and the detection control module is connected between the state indication module and the main control module.

The main control module is further configured to control a state of the state indication module after receiving a detection signal output by the detection control module; the state indication module is configured to indicate a water ingress state of the batter pack in response to a control signal of the main control module.

Optionally, the state indication module includes a first light-emitting diode, a second light-emitting diode and a third light-emitting diode; the detection control module includes a button.

A first electrode of the first light-emitting diode, a first electrode of the second light-emitting diode, a first electrode of the third light-emitting diode and a first terminal of the button are each connected to the power supply, the first terminal of the button is further connected to a seventh terminal of the main control module, a second terminal of the button is grounded, a second electrode of the first light-emitting diode is connected to a fourth terminal of the main control module, a second electrode of the second light-emitting diode is connected to a fifth terminal of the main control module, and a second electrode of the third light-emitting diode is connected to a sixth terminal of the main control module.

Optionally, the wake-up module includes a second switch transistor, a fifth resistor, a sixth resistor, a seventh resistor and an eighth resistor.

A control electrode of the second switch transistor is connected to a first terminal of the fifth resistor, a second terminal of the fifth resistor is connected to an eighth terminal of the main control module, a first electrode of the second switch transistor is connected to a first terminal of the sixth resistor, a second electrode of the second switch transistor is connected to a first terminal of the seventh resistor and a first terminal of the eighth resistor, a second terminal of the sixth resistor is connected to the first electrode or the second electrode of the battery pack, a second terminal of the seventh resistor is connected to a ninth terminal of the main control module, and a second terminal of the eighth resistor is grounded.

Optionally, the waterproof detection terminal is disposed outside the battery pack, and the output circuit of the battery pack includes a discharging module; the circuit further includes a front-end detection module and a battery set; the discharging module includes a third switch transistor.

The battery set and the third switch transistor are connected in series and connected in series between the first electrode and the second electrode of the battery pack; the front-end detection module is connected to cell units of the battery set and is connected to a control electrode of the third switch transistor.

The discharging module is configured to be disconnected in response to a control signal output by the main control module according to the second water ingress signal at the waterproof detection terminal; the front-end detection module is configured to detect voltages of cells and transmit the voltages to the main control module.

According to another aspect of the present invention, a water ingress detection method is provided. The water ingress detection method is applicable by the water ingress detection circuit provided in any embodiment of the present invention and includes the steps described below.

After the second water ingress signal is detected, the switch module is controlled to be turned on every first preset time until the number of times of turning on the switch module reaches a first preset number of times or no second water ingress signal is detected.

If the number of times of turning on the switch module reaches the first preset number of times, and the second water ingress signal is detected, the switch module is controlled to be turned on every second preset time, and the number of times of turning on the switch module is recounted until the number of times of turning on the switch module reaches a second preset number of times or no second water ingress signal is detected, where the first preset number of times is larger than the second preset number of times, and the first preset time is shorter than the second preset time.

Optionally, the water ingress detection method further includes the step described below.

If the number of times of turning on the switch module reaches the second preset number of times, and the second water ingress signal is detected, the switch module is controlled to be turned on every third preset time, the number of times of turning on the switch module is recounted until the number of times of turning on the switch module reaches a third preset number of times or no second water ingress signal is detected, and controlling the switch module and the discharging module of the output circuit of the battery pack to be locked.

Optionally, the water ingress detection circuit further includes a state indication module and a detection control module. The detection control module includes a button.

The state indication module is connected between the power supply and the main control module, and the detection control module is connected between the state indication module and the main control module.

The main control module is further configured to control the state of the state indication module after receiving the detection signal output by the detection control module; the state indication module is configured to indicate the water ingress state of the batter pack in response to the control signal of the main control module.

The water ingress detection method further includes the step described below.

When the second water ingress signal is detected, the state indication module is controlled to flash.

After it is detected that the button is pressed, if the second water ingress signal is detected, the switch module and the discharging module of the output circuit of the battery pack are controlled to be locked.

After it is detected that the button is pressed, if no second water ingress signal is detected, the state indication module is controlled to stop flashing.

According to the technical solutions provided in the embodiments of the present invention, the wake-up module, the switch module and the main control module are disposed in the water ingress detection circuit. In this manner, when water enters the battery pack, the first water ingress signal on the first electrode or the second electrode of the battery pack flows to the wake-up module, the wake-up module wakes up the control module after detecting the first water ingress signal, the control module controls the switch module to be turned on in response to the wake-up signal, the waterproof detection module detects whether water enters the waterproof detection terminal through the switch module and outputs the second water ingress signal to the main control module after detecting water ingress, and the main control module controls the switch module to be turned off in response to the second water ingress signal, so the waterproof detection terminal and the waterproof detection module are disconnected, that is, the current path between the waterproof detection terminal and the waterproof detection module is disconnected, which can avoid electrolytic corrosion of the waterproof detection terminal. Further, the main control module controls the output circuit of the battery pack to be disconnected according to the second water ingress signal, so the current path between the first electrode and the second electrode of the battery pack is disconnected, which can avoid electrolytic corrosion of the first electrode and the second electrode of the battery pack.

It is to be understood that the content described in this section is neither intended to identify key or critical features of the embodiments of the present invention nor intended to limit the scope of the present invention. Other features of the present invention become easily understood through the description provided hereinafter.

### BRIEF DESCRIPTION OF DRAWINGS

To illustrate solutions of embodiments of the present invention more clearly, the drawings used in the description of the embodiments are briefly described hereinafter. Apparently, the drawings described hereinafter illustrate part of the embodiments of the present invention, and those of ordinary skill in the art may obtain other drawings based on the drawings described hereinafter on the premise that no creative work is done.
FIG. 1 is a structural diagram of a water ingress detection circuit according to an embodiment of the present invention;
FIG. 2 is a structural diagram of another water ingress detection circuit according to an embodiment of the present invention;
FIG. 3 is a structural diagram of another water ingress detection circuit according to an embodiment of the present invention;
FIG. 4 is a structural diagram of another water ingress detection circuit according to an embodiment of the present invention;
FIG. 5 is a structural diagram of another water ingress detection circuit according to an embodiment of the present invention;
FIG. 6 is a structural diagram of another water ingress detection circuit according to an embodiment of the present invention;
FIG. 7 is a flowchart of a water ingress detection method according to an embodiment of the present invention;
FIG. 8 is a flowchart of another water ingress detection method according to an embodiment of the present invention; and
FIG. 9 is a flowchart of another water ingress detection method according to an embodiment of the present invention.

### DETAILED DESCRIPTION

To make solutions of the present invention better understood by those skilled in the art, solutions of embodiments of the present invention are described hereinafter clearly and completely in conjunction with drawings in the embodiments of the present invention. Apparently, the embodiments described hereinafter are part, not all, of embodiments of the present invention. Based on the embodiments of the present invention, all other embodiments obtained by those of ordinary skill in the art are within the scope of the present invention on the premise that no creative work is done.

It is to be noted that terms such as "first" and "second" in the description, claims and drawings of the present invention are used for distinguishing between similar objects and are not necessarily used for describing a particular order or sequence. It is to be understood that data used in this manner are interchangeable in appropriate cases so that the embodiments of the present invention described herein can be implemented in an order not illustrated or described herein. Additionally, the terms "including", "having" and variations thereof are intended to encompass a non-exclusive inclusion. For example, a process, method, system, product or device that includes a series of steps or units not only includes the expressly listed steps or units but may also include other steps or units that are not expressly listed or are inherent to such a process, method, product or device.

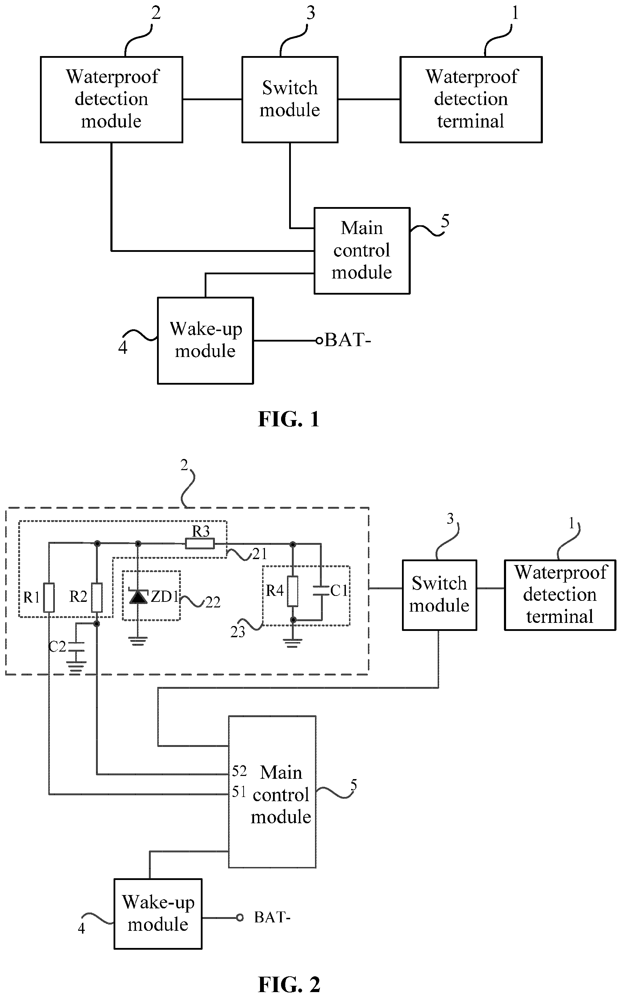

FIG. 1 is a structural diagram of a water ingress detection circuit according to an embodiment of the present invention. Referring to FIG. 1, the water ingress detection circuit includes a waterproof detection terminal 1, a waterproof detection module 2, a switch module 3, a wake-up module 4 and a main control module 5. The switch module 3 is connected between the waterproof detection terminal 1 and the waterproof detection module 2; the waterproof detection module 2 and the switch module 3 are further connected to the main control module 5. A battery pack includes a first electrode and a second electrode, the wake-up module 4 is connected to the first electrode or the second electrode of the battery pack, the wake-up module 4 is connected to the main control module 5, and the wake-up module 4 is configured to wake up the main control module 5 according to a first water ingress signal of the first electrode or of the second electrode. The main control module 5 is configured to control the switch module 3 to be turned on or turned off after being waked up; the waterproof detection module 2 is configured to detect whether water enters the battery pack after the switch module 3 is turned on and output a second water ingress signal after the water enters the battery pack; the main control module 5 is further configured to control an output circuit of the battery pack to be disconnected according to the second water ingress signal.

The waterproof detection terminal 1 may extend to the outside of the battery pack through a plastic shell to detect whether water enters the battery pack. The waterproof detection terminal 1 generates the second water ingress signal and inputs the second water ingress signal to the waterproof detection module 2. The first electrode and the second electrode of the battery back are two terminals of the battery pack respectively, that is, the first electrode of the battery pack is a positive terminal BAT+ and the second electrode of the battery pack is a negative terminal BAT-, or the first electrode of the battery pack is a negative terminal BAT- and the second electrode of the battery pack is a positive terminal BAT+; the wake-up module is always connected to the negative terminal BAT- of the battery pack.

Optionally, the battery pack may be a lithium battery pack.

Specifically, in a normal case, that is, in a case where no water enters the battery back, when the battery back does not need to discharge, the battery pack is in a dormant state so that the energy of the battery pack is conserved, the life of the battery is extended and the damage caused by complete discharge of the battery is avoided; when the battery pack needs to discharge, the positive terminal BAT+ and the negative terminal BAT- of the battery pack are connected to the load, at this time, the wake-up module 4 outputs a wake-up signal through the negative terminal BAT- of the battery pack, the main control module 5 activates the battery pack in response to the wake-up signal, and the output circuit of the battery pack is opened so that the battery pack supplies power to the load normally.

When water enters the battery back, the positive terminal BAT+ and the negative terminal BAT- of the battery pack generate certain impedance due to the water, causing a current of the positive terminal BAT+, that is, the first water ingress signal, to flow through the water loop to the negative terminal BAT- and then to the wake-up module 4. The wake-up module 4 outputs the wake-up signal, and the main control module 5 activates the battery pack in response to the wake-up signal. The main control module 5 further outputs a control signal to control the switch module 3 to be turned on. The current of the positive terminal BAT+ flows through the water loop to the negative terminal BAT- and also to the waterproof detection terminal 1. A voltage at the waterproof detection terminal 1, that is, the second water ingress signal, is transmitted to the main control module 5 through the switch module 3 and the waterproof detection module 2. Therefore, the main control module 5 turns off the switch module 3 after detecting the voltage signal at the waterproof detection terminal 1 and outputs the control signal to disconnect the output circuit of the battery pack.

According to the technical solutions provided in the embodiment of the present invention, the wake-up module, the switch module 3 and the main control module 5 are disposed in the water ingress detection circuit. In this manner, when water enters the battery pack, the first water ingress signal on the first electrode or the second electrode of the battery pack flows to the wake-up module 4, the wake-up module 4 wakes up the control module 5 after detecting the first water ingress signal, the control module 5 controls the switch module 3 to be turned on in response to the wake-up signal, the waterproof detection module 2 detects whether water enters the waterproof detection terminal 1 through the switch module 3 and outputs the second water ingress signal to the main control module 5 after detecting water ingress, and the main control module 5 controls the switch module 3 to be turned off in response to the second water ingress signal, so the waterproof detection terminal 1 and the waterproof detection module 2 are disconnected, that is, the current path between the waterproof detection terminal 1 and the waterproof detection module 2 is disconnected, which can avoid electrolytic corrosion of the waterproof detection terminal 1. Further, the main control module 5 controls the output circuit of the battery pack to be disconnected according to the second water ingress signal, so the current path between the first electrode and the second electrode of the battery pack is disconnected, which can avoid electrolytic corrosion of the first electrode and the second electrode of the battery pack.

Optionally, in other embodiments, the waterproof detection terminal 1 may also be set as a corresponding metal terminal inside the battery pack and is configured to determine whether water enters the battery pack by detecting whether a voltage signal is generated at the waterproof detection terminal 1 inside the battery pack.

FIG. 2 is a structural diagram of another water ingress detection circuit according to an embodiment of the present invention. Referring to FIG. 2, on the basis of the preceding embodiment, the waterproof detection module 2 includes a voltage detection circuit 21, a voltage stabilization circuit 22 and a filtering circuit 23; the voltage detection circuit 21 includes a first resistor R1, a second resistor R2 and a third resistor R3; the voltage stabilization circuit 22 includes a Zener diode ZD1; the filtering circuit 23 includes a fourth resistor R4 and a first capacitor C 1. A first terminal of the first resistor R1 is connected to a first terminal 51 of the main control module 5, a second terminal of the first resistor R1 is separately connected to a first terminal of the second resistor R2, a first electrode of the Zener diode ZD1 and a first terminal of the third resistor R3, a second terminal of the second resistor R2 is connected to a second terminal 52 of the main control module 5, a second electrode of the Zener diode ZD1 is grounded, a second terminal of the third resistor R3 is separately connected to a first terminal of the fourth resistor R4 and a first terminal of the first capacitor C1, the first terminal of the first capacitor C1 is further connected to the switch module 3, and a second terminal of the fourth resistor R4 and a second terminal of the first capacitor C1 are each grounded.

The first resistor R1, the second resistor R2 and the third resistor R3 are configured to detect a voltage in the circuit; the Zener diode ZD1 is configured to provide a stable voltage for other circuits.

Optionally, the waterproof detection module 2 further includes a second capacitor C2.

The second capacitor C2 is used for filtering.

Specifically, when water enters the battery pack, the wake-up module 4 wakes up the main control module 5 after receiving the first water ingress signal from the negative terminal BAT-, and then the main control module 5 controls the switch module 3 to be turned on. Therefore, the current from the positive terminal BAT+ flows through the water loop to the negative terminal BAT- and then to the waterproof detection terminal 1. The voltage at the waterproof detection terminal 1, that is, the second water ingress signal, flows through the switch module 3, the third resistor R3 and the first resistor R1 to the first terminal 51 of the main control module 5 and then flows through the switch module 3, the third resistor R3 and the second resistor R2 to the second terminal 52 of the main control module 5. Thus, when water enters the battery pack, the main control module 5 can simultaneously detect the voltage signal at the first terminal 51 and the second terminal 52. At this time, the main control module 5 turns off the switch module 3 and the output circuit of the battery pack without responding to the wake-up signal of the wake-up module 4. Moreover, due to the fourth resistor R4, the first capacitor C1 and the Zener diode ZD1, the voltage input into the main control module 5 can be filtered and regulated, so the main control module 5 and other elements in the circuit can be further protected.

According to the technical solutions provided in the embodiment, the voltage detection circuit 21, the voltage stabilization circuit 22 and the filtering circuit 23 are disposed, and the voltage detection circuit 21 is separately connected to the first terminal 51 and the second terminal 52 of the main control module 5, so when water enters the battery pack, the main control module 5 can simultaneously detect the voltage signal at two pins and then control the switch module 3 to be disconnected, which ensures the accuracy and reliability of water detection performed by the main control module 5. Moreover, the voltage stabilization circuit 22 and the filtering circuit 23 are disposed, so the voltage flows to the main control module 5 is filtered and regulated, which ensures that the main control module 5 will not be damaged due to the excessive high voltage.

Of course, in other embodiments, the waterproof detection module 2 may include a waterproof detection sensor. When water enters the waterproof detection terminal 1 or water enters the battery pack, it is detected that a circuit parameter of the waterproof detection sensor is changed; at this time, the waterproof detection sensor is configured to output a corresponding signal to represent water ingress in the battery pack, where the circuit parameter includes at least the voltage signal. Alternatively, the waterproof detection module 2 may further include a pressure sensor. When water enters the waterproof detection terminal 1 or water enters the battery pack, it is detected that a circuit parameter of the pressure sensor is changed, representing water ingress in the battery pack, where the circuit parameter includes at least a resistance change signal.

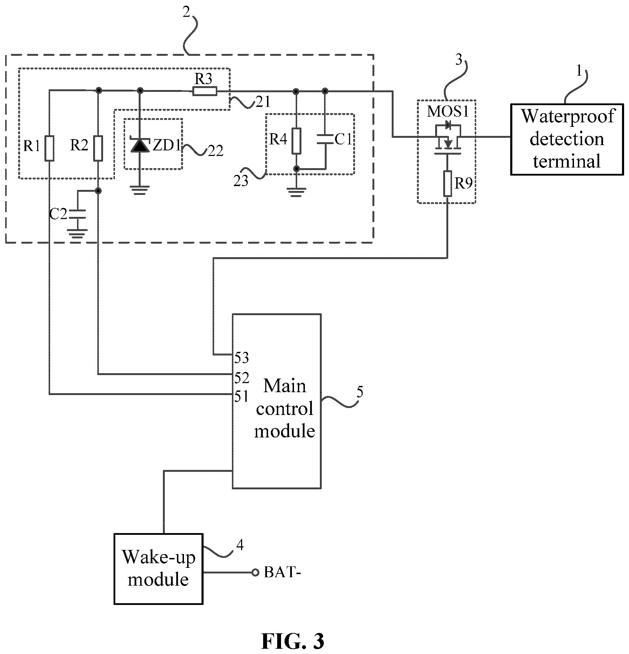

FIG. 3 is a structural diagram of another water ingress detection circuit according to an embodiment of the present invention. Referring to FIG. 3, on the basis of the preceding embodiments, the switch module 3 includes a first switch transistor MOS1. A control electrode of the first switch transistor MOS1 is connected to a third terminal 53 of the main control module 5, a first electrode of the first switch transistor MOS1 is connected to the waterproof detection terminal 1, and a second electrode of the first switch transistor MOS1 is connected to the waterproof detection module 2.

The first switch transistor MOS1 is configured to be turned on when the third terminal 53 of the main control module 5 outputs a high-level signal and to be turned off when the third terminal 53 of the main control module 5 outputs a low-level signal. Alternatively, the first switch transistor MOS1 is configured to be turned off when the third terminal 53 of the main control module 5 outputs a high-level signal and to be turned on when the third terminal 53 of the main control module 5 outputs a low-level signal.

Optionally, the second electrode of the first switch transistor MOS1 is connected to the first terminal of the first capacitor C1.

Optionally, the switch module 3 further includes a ninth resistor R9, a first terminal of the ninth resistor R9 is connected to the control electrode of the first switch transistor MOS1, and a second terminal of the ninth resistor R9 is connected to the third terminal 53 of the main control module 5.

The ninth resistor R9 is used for current limiting.

Exemplarily, when the battery pack works normally, the third terminal 53 of the main control module 5 outputs a high-level voltage to control the first switch transistor MOS1 to be turned on, so the switch module 3 is in a turned-on stage, and a charging operation can be performed on the battery pack. When water enters the battery pack, the first terminal 51 and the second terminal 52 of the main control module 5 simultaneously detect voltage signals. At this time, the third terminal 53 of the main control module 5 outputs a low-level voltage to control the first switch transistor MOS1 to be turned off, and then the switch module 3 is in a turned-off state to disconnect the circuit where the waterproof detection terminal 1 is located. In this manner, electrolytic corrosion of the waterproof detection terminal 1 caused by external water can be avoided, and thus the service life and the safety of the battery pack can be improved.

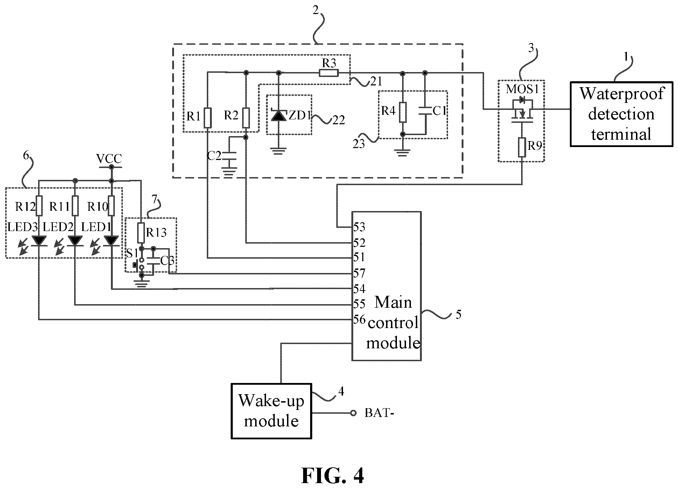

FIG. 4 is a structural diagram of another water ingress detection circuit according to an embodiment of the present invention. Referring to FIG. 4, on the basis of the preceding embodiments, the water ingress detection circuit further includes a state indication module 6 and a detection control module 7. The state indication module 6 is connected between a power supply VCC and the main control module 5, and the detection control module 7 is connected between the state indication module 6 and the main control module 5. The main control module 5 is further configured to control a state of the state indication module 6 after receiving a detection signal output by the detection control module 7; the state indication module 6 is configured to indicate a water ingress state of the batter pack in response to a control signal of the main control module 5.

Specifically, when water enters the battery pack, the detection control module 7 is controlled to output the detection signal, and then the main control module 5 outputs the control signal to control the state of the state indication module 6 in response to the detection signal. The state indication module 6 is observed, so whether there is still water on the battery pack is determined. Exemplarily, the state indication module 6 may include at least a first state and a second state for indicating the water ingress state of the battery pack. For example, the first state may be a light-emitting diode (LED) flashing state indicating that there is water on the battery pack, and the second state may be an LED always-on state indicating that there is no water on the battery pack. When water enters the battery pack, the water on the battery pack needs to be removed by, for example, manually shaking off the water on the battery pack. At this time, the detection control module 7 is controlled to output the detection signal, and the main control module 5 outputs the control signal to control the state of the state indicator module 6 in response to the detection signal, so the state indication module 6 indicates whether there is residual water on the battery pack. If the control signal output by the main control module 5 causes the state indication module 6 to be in the LED flashing state, it is indicated that there is still residual water on the output terminal of the battery pack. If the control signal output by the main control module 5 causes the state indication module 6 to be in the LED always-on state, it is indicated that there is no residual water on the output terminal of the battery pack.

According to the technical solutions provided in the embodiment, the state indication module 6 and the detection control module 7 are disposed, so it can be easily observed whether there is residual water on the output terminal after the water removal operation after water enters the battery back.

With continued reference to FIG. 4, optionally, the state indication module 6 includes a first light-emitting diode LED1, a second light-emitting diode LED2 and a third light-emitting diode LED3; the detection control module 7 includes a button S 1. A first electrode of the first light-emitting diode LED1, a first electrode of the second light-emitting diode LED2, a first electrode of the third light-emitting diode LED3 and a first terminal of the button S 1 are each connected to the power supply VCC, the first terminal of the button S 1 is further connected to a seventh terminal 57 of the main control module 5, a second terminal of the button S1 is grounded, a second electrode of the first light-emitting diode LED1 is connected to a fourth terminal 54 of the main control module 5, a second electrode of the second light-emitting diode LED2 is connected to a fifth terminal 55 of the main control module 5, and a second electrode of the third light-emitting diode LED3 is connected to a sixth terminal 56 of the main control module 5.

The button S 1 is configured to output the detection signal, and the first light-emitting diode LED1, the second light-emitting diode LED2 and the third light-emitting diode LED3 are configured to indicate through different light emission states whether there is still residual water on the output terminal of the battery pack.

Optionally, the state indication module 6 further includes a tenth resistor R10, an eleventh resistor R11 and a twelfth resistor R12. A first terminal of the tenth resistor R10, a first terminal of the eleventh resistor R11 and a first terminal of the twelfth resistor R12 are each connected to the power supply VCC. A second terminal of the tenth resistor R10 is connected to the first electrode of the first light-emitting diode LED1, a second terminal of the eleventh resistor R11 is connected to the first electrode of the second light-emitting diode LED2, and a second terminal of the twelfth resistor R12 is connected to the first electrode of the third light-emitting diode LED3. The detection control module 7 further includes a thirteenth resistor R13 and a third capacitor C3. A first terminal of the thirteenth resistor R13 is connected to the power supply VCC, and a second terminal of the thirteenth resistor R13 is separately connected to the first terminal of the button S1, a first terminal of the third capacitor C3 and the seventh terminal 57 of the main control module 5. A second terminal of the third capacitor C3 is grounded.

The tenth resistor R10, the eleventh resistor R11 and the twelfth resistor R12 are used for current limiting, and the third capacitor C3 is used for filtering.

Specifically, after water enters the battery pack, the battery pack is taken out of the water, and water remaining on the battery pack needs to be shaken off manually. At this time, the button S1 is pressed, and after the seventh terminal 57 of the main control module 5 responds to the detection signal output by the button S1, the fourth terminal 54, the fifth terminal 55 and the sixth terminal 56 of the main control module 5 outputs the control signal so that the first light-emitting diode LED1, the second light-emitting diode LED2 and the third light-emitting diode LED3 emit light, and whether there is residual water on the output terminal of the battery pack is determined according to different light emission states. Exemplarily, the button S1 is pressed, and if the control signal output by the main control module 5 causes the first light-emitting diode LED1, the second light-emitting diode LED2 and the third light-emitting diode LED3 to be in the flashing state, it is indicated that there is still residual water on the output terminal of the battery pack; if the control signal output by the main control module 5 causes the first light-emitting diode LED1, the second light-emitting diode LED2 and the third light-emitting diode LED3 to be in the always-on state, it is indicated that there is no residual water on the output terminal of the battery pack.

According to the technical solutions provided in the embodiment, the user can to visually determine whether there is still residual water on the output terminal of the battery pack through the different light emission states of the first light-emitting diode LED1, the second light-emitting diode LED2 and the third light-emitting diode LED3, so the risk of corrosion and short circuits of the battery pack due to water ingress can be avoided, and the risk of heating and ignition of the battery pack can be avoided.

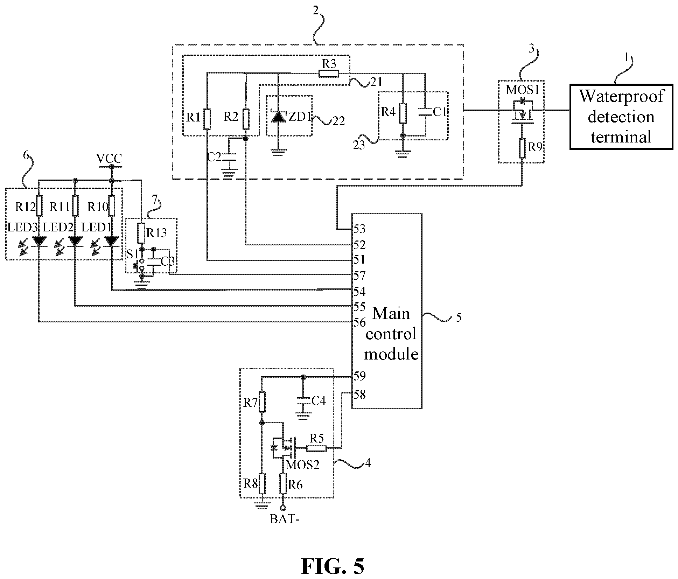

FIG. 5 is a structural diagram of another water ingress detection circuit according to an embodiment of the present invention. Referring to FIG. 5, on the basis of the preceding embodiments, the wake-up module 4 includes a second switch transistor MOS2, a fifth resistor R5, a sixth resistor R6, a seventh resistor R7 and an eighth resistor R8. A control electrode of the second switch transistor MOS2 is connected to a first terminal of the fifth resistor R5, a second terminal of the fifth resistor R5 is connected to an eighth terminal 58 of the main control module 5, a first electrode of the second switch transistor MOS2 is connected to a first terminal of the sixth resistor R6, a second electrode of the second switch transistor MOS2 is connected to a first terminal of the seventh resistor R7 and a first terminal of the eighth resistor R8, a second terminal of the sixth resistor R6 is connected to the first electrode or the second electrode of the battery pack, a second terminal of the seventh resistor R7 is connected to a ninth terminal 59 of the main control module 5, and a second terminal of the eighth resistor R8 is grounded.

The second switch transistor MOS2 is configured to transmit the current from the negative terminal BAT- to the main control module 5 when the second switch transistor MOS2 is turned on, the fifth resistor R5 is configured to regulate the voltage under the control of the main control module 5 to control the second switch transistor MOS2 to be turned on or turned off, and the sixth resistor R6, the seventh resistor R7 and the eighth resistor R8 are used for current limiting.

Optionally, the wake-up module 4 further includes a fourth capacitor C4, a first terminal of the fourth capacitor C4 is connected to the ninth terminal 59 of the main control module 5, and a second terminal of the fourth capacitor C4 is grounded.

The fourth capacitor C4 is used for filtering.

Specifically, when the second switch transistor MOS2 is turned on, the current from the negative terminal BAT- of the battery pack is input into the ninth terminal 59 of the main control module 5 through the sixth resistor R6, the second switch transistor MOS2 and the seventh resistor R7, thereby waking up the main control module 5. The main control module 5 is waked up when the second switch transistor MOS2 is turned on, so the availability and flexibility of the device can be improved. Moreover, in this setting, power is only consumed when the main control module 5 needs to be woken up, avoiding unnecessary energy waste.

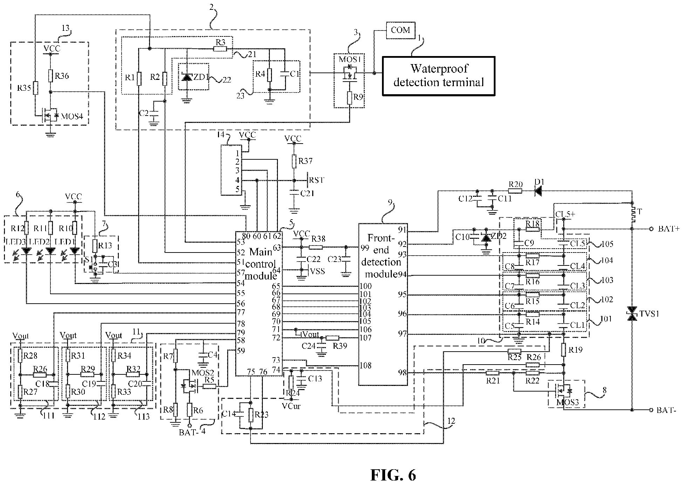

FIG. 6 is a structural diagram of another water ingress detection circuit according to an embodiment of the present invention. Referring to FIG. 6, on the basis of the preceding embodiments, the waterproof detection terminal 1 is disposed outside the battery pack, and the output circuit of the battery pack includes a discharging module 8; the circuit further includes a front-end detection module 9 and a battery set 10; the discharging module 8 includes a third switch transistor MOS3. The battery set 10 and the third switch transistor MOS3 are connected in series and connected in series between the first electrode and the second electrode of the battery pack; the front-end detection module 9 is connected to cell units of the battery set 10 and is connected to a control electrode of the third switch transistor MOS3; the discharging module 8 is configured to be disconnected in response to a control signal output by the main control module 5 according to the second water ingress signal at the waterproof detection terminal 1; the front-end detection module 9 is configured to detect voltages of cells and transmit the voltages to the main control module 5.

The third switch transistor MOS3 is configured to allow the battery pack to discharge normally when the third switch transistor MOS3 is turned on, and to prohibit the battery pack from discharging when the third switch transistor MOS3 is turned off. The battery set includes multiple cell units, and the multiple cell units are connected in series. For example, the battery set includes five cell units, that is, a first cell unit 101, a second cell unit 102, a third cell unit 103, a fourth cell unit 104 and a fifth cell unit 105 respectively, and the five cell units are connected in series.

Optionally, the water ingress detection circuit further includes a nineteenth resistor R19.

The nineteenth resistor R19 is used for current limiting.

Optionally, the first cell unit 101 includes a fourteenth resistor R14, a fifth capacitor C5 and a first cell CL1, the second cell unit 102 includes a fifteenth resistor R15, a sixth capacitor C6 and a second cell CL2, the third cell unit 103 includes a sixteenth resistor R16, a seventh capacitor C7 and a third cell CL3, the fourth cell unit 104 includes a seventeenth resistor R17, an eighth capacitor C8 and a fourth cell CL4, and the fifth cell unit 105 includes an eighteenth resistor R18, a ninth capacitor C9 and a fifth cell CL5. A first terminal of the fourteenth resistor R14 is connected to a first terminal of the fifth capacitor C5 and to a seventh terminal 97 of the front-end detection module 9, a second terminal of the fourteenth resistor R14 is connected to a positive electrode of the first cell CL1, and a negative electrode of the first cell CL1 is connected to a second terminal of the fifth capacitor C5 and is grounded. A first terminal of the fifteenth resistor R15 is connected to a first terminal of the sixth capacitor C6 and to a fifth terminal 95 of the front-end detection module 9, a second terminal of the fifteenth resistor R15 is connected to a positive electrode of the second cell CL2, a negative electrode of the second cell CL2 is separately connected to the second terminal of the fourteenth resistor R14 and the positive electrode of the first cell CL1, and a second terminal of the sixth capacitor C6 is separately connected to the first terminal of the fourteenth resistor R14 and the first terminal of the fifth capacitor C5 and is connected to a sixth terminal 96 of the front-end detection module 9. A first terminal of the sixteenth resistor R16 is connected to a first terminal of the seventh capacitor C7 and to a fourth terminal 94 of the front-end detection module 9, a second terminal of the sixteenth resistor R16 is connected to a positive electrode of the third cell CL3, a negative electrode of the third cell CL3 is separately connected to the second terminal of the fifteenth resistor R15 and the positive electrode of the second cell CL2, and a second terminal of the seventh capacitor C7 is separately connected to the first terminal of the fifteenth resistor R15 and the first terminal of the sixth capacitor C6 and is connected to the fifth terminal 95 of the front-end detection module 9. A first terminal of the seventeenth resistor R17 is connected to a first terminal of the eighth capacitor C8 and to a third terminal 93 of the front-end detection module 9, a second terminal of the seventeenth resistor R17 is connected to a positive electrode of the fourth cell CL4, a negative electrode of the fourth cell CL4 is separately connected to the second terminal of the sixteenth resistor R16 and the positive electrode of the third cell CL3, and a second terminal of the eighth capacitor C8 is separately connected to the first terminal of the sixteenth resistor R16 and the first terminal of the seventh capacitor C7 and is connected to the fourth terminal 94 of the front-end detection module 9. A first terminal of the eighteenth resistor R18 is connected to a first terminal of the ninth capacitor C9 and is connected to a second terminal 92 of the front-end detection module 9, a second terminal of the eighteenth resistor R18 is connected to a positive electrode of the fifth cell CL5, a negative electrode of the fifth cell CL5 is separately connected to the second terminal of the seventeenth resistor R17 and the positive electrode of the fourth cell CL4, and a second terminal of the ninth capacitor C9 is separately connected to the first terminal of the seventeenth resistor R17 and the first terminal of the eighth capacitor C8 and is connected to the third terminal 93 of the front-end detection module 9.

Optionally, the water ingress detection circuit further includes a tenth capacitor C 10 and a second Zener transistor ZD2. A first terminal of the tenth capacitor C10 is separately connected to the second terminal 92 of the front-end detection module 9, a first electrode of the second Zener transistor ZD2, the first terminal of the ninth capacitor C9 and the first terminal of the eighteenth resistor R18, and a second terminal of the tenth capacitor C10 and a second electrode of the second Zener transistor ZD2 are grounded.

The tenth capacitor C10 is used for filtering, and the second Zener transistor ZD2 is used for voltage regulation.

Optionally, the water ingress detection circuit further includes a twentieth resistor R20, an eleventh capacitor C11, a twelfth capacitor C12 and a diode D1. A first terminal of the twelfth capacitor C12 is separately connected to a first terminal 91 of the front-end detection module 9, a first terminal of the eleventh capacitor C11 and a first terminal of the twentieth resistor R20, a second terminal of the twelfth capacitor C12 and a second terminal of the eleventh capacitor C11 are each grounded, a second terminal of the twentieth resistor R20 is connected to a first electrode of the diode D1, a second terminal of the diode D1 is connected to a first terminal of an antistatic wire T, and a second terminal of the antistatic wire T is connected to the positive terminal BAT+ of the battery pack.

The eleventh capacitor C11 and the twelfth capacitor C12 are used for filtering, the twentieth resistor R20 is used for current limiting, and the diode D1 is used for anti-reverse connection.

Optionally, the water ingress detection circuit further includes a twenty-first resistor R21 and a twenty-second resistor R22. A first terminal of the twenty-first resistor R21 is connected to an eighth terminal 98 of the front-end detection module 9, a second terminal of the twenty-first resistor R21 is connected to a first terminal of the twenty-second resistor R22 and connected to the control electrode of the third switch transistor MOS3, and a second terminal of the twenty-second resistor R22 is connected to a second electrode of the third switch transistor MOS3.

The twenty-first resistor R21 and the twenty-second resistor R22 are used for current limiting.

Optionally, the water ingress detection circuit further includes a temperature detection module 11. The temperature detection module 11 includes three temperature detection units, that is, a first temperature detection unit 111, a second temperature detection unit 112 and a third temperature detection unit 113 respectively.

The first temperature detection unit 111 is configured to detect the temperature of cells of the battery set 10, the second temperature detection unit 112 is configured to detect the temperature of the third switch transistor MOS3, and the third temperature detection unit 113 is configured to detect the temperature of a positive cell assembly CL5+.

Optionally, the first temperature detection unit 111 includes a twenty-sixth resistor R26, a twenty-seventh resistor R27, a twenty-eighth resistor R28 and an eighteenth capacitor C18, the second temperature detection unit 112 includes a twenty-ninth resistor R29, a thirtieth resistor R30, a thirty-first resistor R31 and a nineteenth capacitor C19, and the third temperature detection unit 113 includes a thirty-second resistor R32, a thirty-third resistor R33, a thirty-fourth resistor R34 and a twentieth capacitor C20. A first terminal of the twenty-eighth resistor R28, a first terminal of the thirty first resistor R31 and a first terminal of the thirty-fourth resistor R34 are each connected to a first supply Vout, a first terminal of the twenty-sixth resistor R26 is separately connected to a second terminal of the twenty-eighth resistor R28 and a first terminal of the twenty-seventh resistor R27, a second terminal of the twenty-sixth resistor R26 is connected to a twenty-seventh terminal 77 of the main control module 5 and a first terminal of the eighteenth capacitor C18, and a second terminal of the twenty-seventh resistor R27 and a second terminal of the eighteenth capacitor C18 are each grounded. A first terminal of the twenty-ninth resistor R29 is separately connected to a second terminal of the thirty-first resistor R31 and a first terminal of the thirtieth resistor R30, a second terminal of the twenty-ninth resistor R29 is connected to a twenty-eighth terminal 78 of the main control module 5 and a first terminal of the nineteenth capacitor C19, and a second terminal of the thirtieth resistor R30 and a second terminal of the nineteenth capacitor C19 are each grounded. A first terminal of the thirty-second resistor R32 is separately connected to a second terminal of the thirty-fourth resistor R34 and a first terminal of the thirty-third resistor R33, a second terminal of the thirty-second resistor R32 is connected to a twenty-ninth terminal 79 of the main control module 5 and a first terminal of the twentieth capacitor C20, and a second terminal of the thirty-third resistor R33 and a second terminal of the twentieth capacitor C20 are each grounded.

The first supply Vout is used for power supply; the twenty-sixth resistor R26, the twenty-seventh resistor R27, the twenty-eighth resistor R28, the twenty-ninth resistor R29, the thirtieth resistor R30, the thirty-first resistor R31, the thirty-second resistor R32, the thirty-third resistor R33 and the thirty-fourth resistor R34 are used for current limiting; the eighteenth capacitor C18, the nineteenth capacitor C19 and the twentieth capacitor C20 are used for filtering.

Optionally, the water ingress detection circuit further includes an overcurrent protection module 12, and the overcurrent protection module 12 includes a twenty-third resistor R23, a twenty-fourth resistor R24, a twenty-fifth resistor R25, a twenty-sixth resistor R26, a thirteenth capacitor C13 and a fourteenth capacitor C14. A first terminal of the twenty-third resistor R23 is connected to a first terminal of the fourteenth capacitor C14 and to a twenty-fifth terminal 75 of the main control module 5, a second terminal of the twenty-third resistor R23 is separately connected to a second terminal of the fourteenth capacitor C14, a twenty-sixth terminal 76 of the main control module 5 and a first terminal of the twenty-fifth resistor R25, a second terminal of the twenty-fifth resistor R25 is connected to the second terminal of the fifth capacitor C5, a first terminal of the twenty-fourth resistor R24 is separately connected to a twenty-fourth terminal 74 of the main control module 5, a first terminal of the thirteenth capacitor C13 and the first terminal of the twenty-sixth resistor R26, a second terminal of the twenty-fourth resistor R24 is connected to a second supply VCur, a second terminal of the thirteenth capacitor C13 is grounded, and the second terminal of the twenty-sixth resistor R26 is connected to a second terminal of the nineteenth resistor R19.

The overcurrent protection module 12 is configured to provide protection when the first electrode and the second electrode of the battery pack are short-circuited. The twenty-third resistor R23 and the fourteenth capacitor C14 are used for current sampling; the twenty-fourth resistor R24, the twenty-fifth resistor R25 and the twenty-sixth resistor R26 are used for current limiting, and the thirteenth capacitor C13 is used for filtering.

Optionally, the water ingress detection circuit further includes a communication module 13, and the communication module 13 includes a thirty-fifth resistor R35, a thirty-sixth resistor R36 and a fourth switch transistor MOS4. A first terminal of the thirty-fifth resistor R35 is connected to the second terminal of the first resistor R1, a second terminal of the thirty-fifth resistor R35 is connected to a control electrode of the fourth switch transistor MOS4, a first terminal of the thirty-sixth resistor R36 is connected to the power supply VCC, a second terminal of the thirty-sixth resistor R36 is connected to a first terminal of the fourth switch transistor MOS4 and to a thirtieth terminal 80 of the main control module 5, and a second electrode of the fourth switch transistor MOS4 is grounded.

The communication module 13 is configured to transmit parameters of the voltage, the temperature and the overcurrent of the battery pack. The thirty-fifth resistor R35 and the thirty-sixth resistor R36 are used for current limiting. The fourth switch transistor MOS4 is configured to be turned on when the thirty-fifth resistor R35 is at a high level and then cause the thirtieth terminal 80 of the main control module 5 to output a low-level signal, and the fourth switch transistor MOS4 is configured to be turned off when the thirty-fifth resistor R35 is at a low level and then cause the thirtieth terminal 80 of the main control module 5 to output a high-level signal.

Optionally, the water ingress detection circuit further includes a programming module 14, and the programming module 14 includes a terminal block CN1, a thirty-seventh resistor R37 and a twenty-first capacitor C21. A first terminal of the terminal block CN1 is connected to the power supply VCC, a second terminal of the terminal block CN1 is connected to a twelfth terminal 62 of the main control module 5, a third terminal of the terminal block CN1 is connected to an eleventh terminal 61 of the main control module 5, a fourth terminal of the terminal block CN1 is connected to a tenth terminal 60 of the main control module 5 and is connected to a second terminal of the thirty-seventh resistor R37 and a first terminal of the twenty-first capacitor C21, a fifth terminal of the terminal block CN1 is grounded, a first terminal of the thirty-seventh resistor R37 is connected to the power supply VCC, and a second terminal of the twenty-first capacitor C21 is grounded.

The programming module 14 is used for a programming process, and the thirty-seventh resistor R37 and the twenty-first capacitor C21 are used for resetting.

Optionally, the water ingress detection circuit further includes a thirty-eighth resistor R38, a twenty-second capacitor C22 and a twenty-third capacitor C23. A first terminal of the thirty-eighth resistor R38 is separately connected to a thirteenth terminal 63 of the main control module 5, the power supply VCC and a first terminal of the twenty-second capacitor C22, a second terminal of the thirty-eighth resistor R38 is connected to a first terminal of the twenty-third capacitor C23 and a ninth terminal 99 of the front-end detection module 9, the first terminal of the twenty-second capacitor C22 is connected to a fourteenth terminal 64 of the main control module 5 and is grounded, and a second terminal of the twenty-third capacitor C23 is grounded.

The thirty-eighth resistor R38 is used for current limiting, and the twenty-second capacitor C22 and the twenty-third capacitor C23 are used for filtering.

Optionally, the water ingress detection circuit further includes a thirty-ninth resistor R39 and a twenty-fourth capacitor C24. A first terminal of the thirty-ninth resistor R39 is connected to a twenty-second terminal 72 of the main control module 5 and to a first terminal of the twenty-fourth capacitor C24. A second terminal of the thirty-ninth resistor R39 is connected to a seventeenth terminal 107 of the front-terminal detection module 9, and a second terminal of the twenty-fourth capacitor C24 is grounded.

The thirty-ninth resistor R39 is used for current limiting, and the twenty-fourth capacitor C24 is used for filtering.

Optionally, a fifteenth terminal 65 of the main control module 5 is connected to a tenth terminal 100 of the front-end detection module 9, a sixteenth terminal 66 of the main control module 5 is connected to an eleventh terminal 101 of the front-end detection module 9, a seventeenth terminal 67 of the main control module 5 is connected to a twelfth terminal 102 of the front-end detection module 9, an eighteenth terminal 68 of the main control module 5 is connected to a thirteenth terminal 103 of the front-end detection module 9, a nineteenth terminal 69 of the main control module 5 is connected to a fourteenth terminal 104 of the front-end detection module 9, a twentieth terminal 70 of the main control module 5 is connected to a fifteenth terminal 105 of the front-end detection module 9, and a twentieth terminal 71 of the main control module 5 is connected to a sixteenth terminal 106 of the front-end detection module 9 and is connected to the Connect and connect the first supply Vout.

Optionally, the water ingress detection circuit further includes a bidirectional transient suppression diode TVS1, and the bidirectional transient suppression diode TVS1 is connected between the positive terminal BAT+ and the negative terminal BAT- of the battery pack.

The bidirectional transient suppression diode TVS1 is configured to limit the overvoltage and the transient voltage in the circuit.

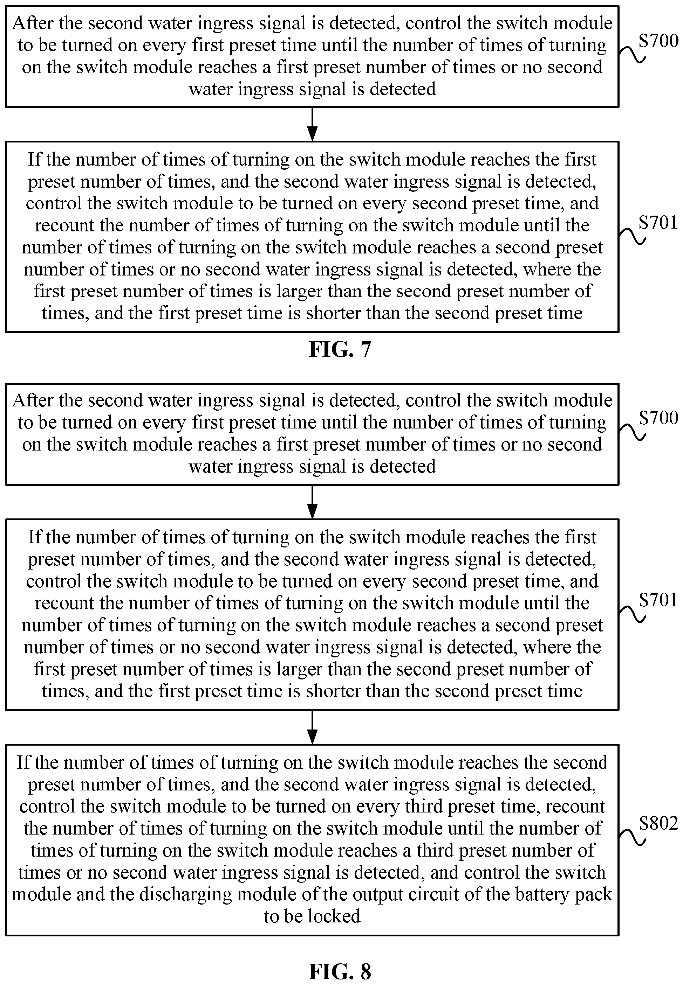

Referring to FIG. 7, the specific working process of the water ingress detection circuit is described below.

When the battery pack is in a normal charging process, the third terminal 53 of the main control module 5 outputs a high-level voltage, controlling the first switch transistor MOS1 to be turned on and the switch module 3 to be in the turned-on state, so a COM terminal is connected to the communication module 13. At this time, the communication module 13 communicates with the charger of the battery pack, that is, the COM terminal, to transmit the voltage, the temperature and the overcurrent signal of the battery pack. An input signal of the COM terminal is a high-level signal or a low-level signal. When the input signal is a high-level signal, the high-level signal flows through the thirty-fifth resistor R35 to the fourth switch transistor MOS4, so the fourth switch transistor MOS4 is turned on, and an output signal of the thirtieth terminal 80 of the main control module 5 is a low-level signal. When the input signal is a low-level signal, the low-level signal flows through the thirty-fifth resistor R35 to the fourth switch transistor MOS4, so the fourth switch transistor MOS4 is turned off, and the thirtieth terminal 80 of the main control module 5 outputs a high level signal (that is, VCC). In this manner, the high-level signal or the low-level signal output from the thirtieth terminal 80 of the main control module 5 can indicate the charging operation for the battery pack.

When the battery pack is in a normal discharge process, the positive terminal BAT+ and the negative terminal BAT- of the battery pack are connected to the load. At this time, the wake-up module 4 outputs a wake-up signal under the action of the current flowing from the negative terminal BAT- of the battery pack, then the main control module 5 activates the battery pack in response to the wake-up signal, and the third switch transistor MOS3 is controlled to be turned on, so the battery pack can supply power to the load normally.

When water enters the battery pack, the wake-up module 4 wakes up the main control module 5 after receiving the first water ingress signal from the negative terminal BAT-, and then the main control module 5 controls the switch module 3 to be turned on. Therefore, the current from the positive terminal BAT+ flows through the water loop to the negative terminal BAT- and then to the waterproof detection terminal 1. The voltage at the waterproof detection terminal 1, that is, the second water ingress signal, flows through the switch module 3, the third resistor R3 and the first resistor R1 to the first terminal 51 of the main control module 5 and then flows through the switch module 3, the third resistor R3 and the second resistor R2 to the second terminal 52 of the main control module 5. Thus, when water enters the battery pack, the main control module 5 can detect voltage signals at the first terminal 51 and the second terminal 52 of the main control module 5 simultaneously, the third terminal 53 of the main control module 5 outputs a low-level voltage to control the first switch transistor MOS1 to be turned off, and then the switch module 3 is in the turned-off state to disconnect the circuit of the waterproof detection terminal 1 and the waterproof detection module 2. At this time, the main control module 5 turns off the switch module 3 and the output circuit of the battery pack without responding to the wake-up signal of the wake-up module 4. Moreover, the fourth resistor R4, the first capacitor C1 and the Zener diode ZD1 can filter and regulate the voltage input to the main control module 5. The state indication module 6 and the detection control module 7 are disposed. In this manner, the detection control module 7 is controlled to output the detection signal, and then the main control module 5 outputs the control signal to control the state of the state indication module 6 in response to the detection signal. The state indication module 6 is observed, so whether there is still water on the battery pack is determined.

Moreover, the front-end detection module 9 can detect voltages of the first cell CL1 to the fifth cell CL5, and the front-end detection module 9 outputs the voltage signals to the main control module so that the main control module 5 can perform corresponding processing according to the voltage signals. The temperature detection module 11 is configured to detect the temperatures of the cells, the third switch transistor MOS3 and the positive cell assembly CL5+ during working of the battery pack, so as to ensure that the temperature of the battery pack during working is not too high. The overcurrent protection module 12 further avoids the risk of the short circuit between the first electrode and the second electrode of the battery pack. The programming module 14 can further write programs or data into the main control module 5 to enable the main control module 5 to perform specified functions. Multiple functional modules are disposed, so the safety of the battery back is further ensured.

FIG. 7 is a flowchart of a water ingress detection method according to an embodiment of the present invention, and the method may be applied by the water ingress detection circuit provided in any of the preceding embodiments. Referring to FIG. 7, the water ingress detection method includes the steps described below.

In S700, after the second water ingress signal is detected, the switch module is controlled to be turned on every first preset time until the number of times of turning on the switch module reaches a first preset number of times or no second water ingress signal is detected.

Specifically, when water enters the battery pack, the current at the positive terminal, that is, the first water ingress signal, flows through the water loop to the negative terminal and then to the wake-up module, so the main control module activates the battery pack in response to the wake-up signal and the switch module is turned on. Thus, the voltage at the waterproof detection terminal, that is, the second water ingress signal, flows through the switch module and the waterproof detection module to the main control module. After the main control module detects the second water ingress signal, the switch module is turned on at first-preset-time intervals until the number of the first preset time intervals reaches the first preset number of times or the main control module does not detect the second water ingress signal. Exemplarily, the first preset time is 10 seconds, and the first preset number of times is 20 times. After water enters the battery pack for 10 seconds, the main control module automatically turns on the switch module so that the main control module can detect the second water ingress signal. If the main control module can still detect the second water ingress signal, the main control module turns on the switch module after an interval of 10 seconds. After the number of times of turning on the switch module reaches 20 times, if the main control module can still detect the second water ingress signal, the main control module does not turn on the switch module at first-preset-time intervals. If the main control module detects no second water ingress signal within the first preset number of times, the water ingress detection is stopped.

In S701, if the number of times of turning on the switch module reaches the first preset number of times, and the second water ingress signal is detected, the switch module is controlled to be turned on every second preset time, and the number of times of turning on the switch module is recounted until the number of times of turning on the switch module reaches a second preset number of times or no second water ingress signal is detected, where the first preset number of times is larger than the second preset number of times, and the first preset time is shorter than the second preset time.

Specifically, when the number of times of the main control module turning on the switch module at first-preset-time intervals reaches the first preset number of times and the main control module can still detect the second water ingress signal, at this time, the switch module is turned on at second-preset-time intervals until the number of the second preset time intervals reaches the second preset number of times or the main control module detects no second water ingress signal. Exemplarily, the second preset time is 30 minutes, and the second preset number of times is 10 times. After water enters the battery pack for 30 minutes, the main control module automatically turns on the switch module so that the main control module can detect the second water ingress signal. If the main control module can still detect the second water ingress signal, the main control module turns on the switch module after an interval of 30 minutes. After the number of times of turning on the switch module reaches 10 times, if the main control module can still detect the second water ingress signal, the main control module does not turn on the switch module at second-preset-time intervals. If the main control module detects no second water ingress signal within the second preset number of times, the water ingress detection is stopped.

According to the technical solutions provided in the embodiment, the main control module controls the switch module to be automatically turned on at first-preset-time intervals or second-preset-time intervals, and the first preset time is shorter than the second preset time, so the second preset time can ensure that the switch module will not be turned on multiple times within a short period of time, and thus excessive load or damage is avoided. Moreover, the preset number of times and preset times are flexibly adjusted, so the performance and usage costs of the device can be balanced according to actual needs, and the overall efficiency of the device can be improved.

FIG. 8 is a flowchart of another water ingress detection method according to an embodiment of the present invention. Referring to FIG. 8, on the basis of the preceding embodiments, the waterproof detection method further includes the steps described below.

In S802, if the number of times of turning on the switch module reaches the second preset number of times, and the second water ingress signal is detected, the switch module is controlled to be turned on every third preset time, the number of times of turning on the switch module is recounted until the number of times of turning on the switch module reaches a third preset number of times or no second water ingress signal is detected, and the switch module and the discharging module of the output circuit of the battery pack are controlled to be locked.

Specifically, the second preset number of times is larger than the third preset number of times, and the second preset time is shorter than the third preset time. When the number of times of the main control module turning on the switch module at second-preset-time intervals reaches the second preset number of times and the main control module can still detect the second water ingress signal, at this time, the switch module is turned on at third-preset-time intervals until the number of the third preset time intervals reaches the third preset number of times or the main control module detects no second water ingress signal. Exemplarily, the third preset time is 1 hour, and the third preset number of times is 5 times. After water enters the battery pack for 1 hour, the main control module automatically turns on the switch module so that the main control module can detect the second water ingress signal. If the main control module can still detect the second water ingress signal, the main control module turns on the switch module after an interval of 1 hour. After the number of times of turning on the switch module reaches 5 times, if the main control module can still detect the second water ingress signal, the switch module and the discharging module are locked; if the main control module detects no second water ingress signal within the third preset number of times, the water ingress detection is stopped. In this manner, the safety of the battery pack after prolonged water ingress can be ensured.

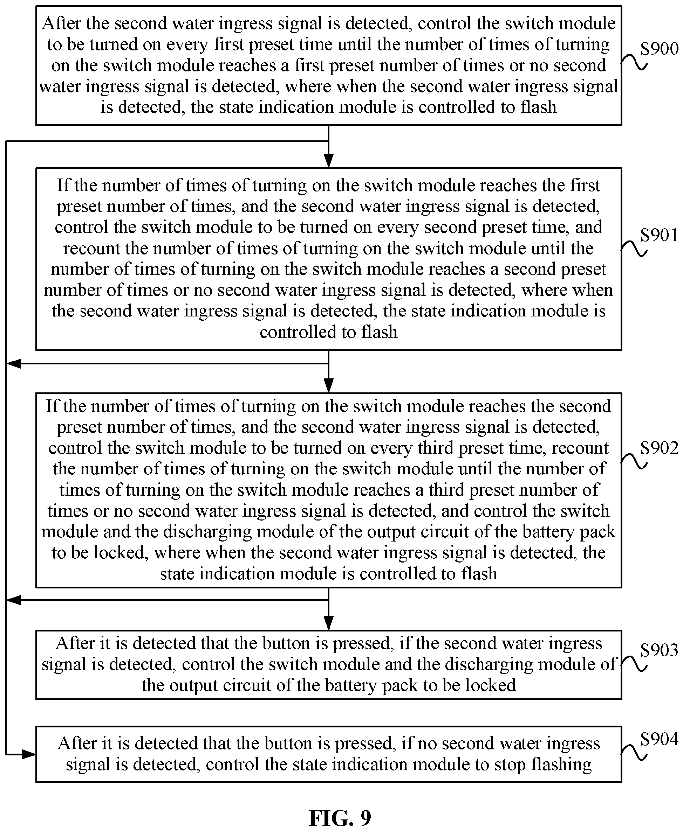

FIG. 9 is a flowchart of another water ingress detection method according to an embodiment of the present invention. Referring to FIG. 9, on the basis of the preceding embodiments, the water ingress detection circuit further includes the state indication module and the detection control module, and the detection control module includes the button.

The state indication module is connected between the power supply and the main control module, and the detection control module is connected between the state indication module and the main control module.

The main control module is further configured to control the state of the state indication module after receiving the detection signal output by the detection control module; the state indication module is configured to indicate the water ingress state of the batter pack in response to the control signal of the main control module.

The water ingress detection method further includes the steps described below.

In S900, after the second water ingress signal is detected, the switch module is controlled to be turned on every first preset time until the number of times of turning on the switch module reaches a first preset number of times or no second water ingress signal is detected. When the second water ingress signal is detected, the state indication module is controlled to flash.

Specifically, when water enters the battery pack, the detection control module is controlled to output the detection signal, and then the main control module outputs the control signal to control the state of the state indication module in response to the detection signal. The state indication module is observed, so whether there is still water on the battery pack is determined. Exemplarily, after water enters the battery pack for 10 seconds, the main control module automatically turns on the switch module so that the main control module can detect the second water ingress signal. If the main control module controls the state indication module to flash, it is indicated that there is water on the output terminal of the battery pack.

In S901, if the number of times of turning on the switch module reaches the first preset number of times, and the second water ingress signal is detected, the switch module is controlled to be turned on every second preset time, and the number of times of turning on the switch module is recounted until the number of times of turning on the switch module reaches a second preset number of times or no second water ingress signal is detected, where the first preset number of times is larger than the second preset number of times, and the first preset time is shorter than the second preset time. When the second water ingress signal is detected, the state indication module is controlled to flash.

Specifically, if the battery pack is not taken out from water after the number of times of turning on the switch module reaches 20 times, the switch module is turned on again after an interval of 30 minutes so that the main control module can detect the second water ingress signal. If the main control module controls the state indication module to flash, it is indicated that there is water on the output terminal of the battery pack.

In S902, if the number of times of turning on the switch module reaches the second preset number of times, and the second water ingress signal is detected, the switch module is controlled to be turned on every third preset time, the number of times of turning on the switch module is recounted until the number of times of turning on the switch module reaches a third preset number of times or no second water ingress signal is detected, and the switch module and the discharging module of the output circuit of the battery pack are controlled to be locked. When the second water ingress signal is detected, the state indication module is controlled to flash.

Specifically, if the battery pack is not taken out from water after the number of times of turning on the switch module reaches 10 times, the switch module is turned on again after an interval of 1 hour so that the main control module can detect the second water ingress signal. If the main control module controls the state indication module to flash, it is indicated that there is water on the output terminal of the battery pack.

In S903, after it is detected that the button is pressed, if the second water ingress signal is detected, the switch module and the discharging module of the output circuit of the battery pack are controlled to be locked;

Specifically, when the number of times of the main control module turning on the switch module reaches 5 times, the button is pressed. If the main control module can still detect the second water ingress signal, the switch module and the discharging module are locked.

In S904, after it is detected that the button is pressed, if no second water ingress signal is detected, the state indication module is controlled to stop flashing.

After water enters the battery pack for 10 seconds, the main control module automatically turns on the switch module so that the main control module can detect the second water ingress signal. If the main control module controls the state indication module to flash, it is indicated that there is water on the output terminal of the battery pack. The battery pack is taken out of the water, water remaining on the battery pack is shaken off manually, and the button is pressed. If the main control module controls the state indication module to stop flashing in response to the state of the button, it is indicated that there is no residual water on the output terminal of the battery pack. If the battery pack is not taken out of the water after the number of times of turning on the switch module reaches 20 times, the switch module is turned on again after an interval of 30 minutes so that the main control module can detect the second water ingress signal; if the main control module controls the state indication module to flash, it is indicated that there is water on the output terminal of the battery pack. The battery pack is taken out of the water, water remaining on the battery pack is shaken off manually, and the button is pressed. If the main control module controls the state indication module to stop flashing in response to the state of the button, it is indicated that there is no residual water on the output terminal of the battery pack. If the battery pack is not taken out of the water after the number of times of turning on the switch module reaches 10 times, the switch module is turned on again after an interval of 1 hour so that the main control module can detect the second water ingress signal; if the main control module controls the state indication module to flash, it is indicated that there is water on the output terminal of the battery pack. The battery pack is taken out of the water, water remaining on the battery pack is shaken off manually, and the button is pressed. If the main control module controls the state indication module to stop flashing in response to the state of the button, it is indicated that there is no residual water on the output terminal of the battery pack. At this time, when the state indication module is off, the button is pressed so that the battery pack exits the locking mode.

According to the technical solutions provided in the embodiment, the user can visually determine whether there is residual water on the output terminal of the battery pack according to different light emission states of the state indication module. Moreover, the water ingress detection method includes a locking state and a locking-exited state. When the battery pack is in a prolonged water ingress state, the switch module and the discharging module are locked, so the safety of the battery pack is further ensured.

It is to be understood that various forms of processes shown above may be adopted with steps reordered, added or deleted. For example, the steps described in the present invention may be performed in parallel, sequentially or in different sequences, as long as the desired results of the technical solutions of the present invention can be achieved, and no limitation is imposed herein.

The preceding embodiments do not limit the scope of the present invention. It is to be understood by those skilled in the art that various modifications, combinations, sub-combinations and substitutions may be performed according to design requirements and other factors. Any modification, equivalent substitution, improvement or the like made within the spirit and principle of the present invention is within the scope of the present invention.

## Claims

1. A water ingress detection circuit, applied to a battery pack, comprising:
a waterproof detection terminal (1), a waterproof detection module (2), a switch module (3), a wake-up module (4) and a main control module (5), wherein the switch module (3) is connected between the waterproof detection terminal (1) and the waterproof detection module (2), and the waterproof detection module (2) and the switch module (3) are further connected to the main control module (5);
the battery pack comprises a first electrode and a second electrode, the wake-up module (4) is connected to the first electrode or the second electrode of the battery pack, the wake-up module (4) is connected to the main control module (5), and the wake-up module (4) is configured to wake up the main control module (5) according to a first water ingress signal of the first electrode or of the second electrode; and
the main control module (5) is configured to control the switch module (3) to be turned on or turned off after being waked up; the waterproof detection module (2) is configured to detect whether the battery pack has water ingress after the switch module (3) is turned on and output a second water ingress signal in response to detecting that the battery pack has water ingress; the main control module (5) is further configured to control an output circuit of the battery pack to be disconnected according to the second water ingress signal.

2. The water ingress detection circuit according to claim 1, wherein the waterproof detection module (2) comprises a voltage detection circuit, a voltage stabilization circuit and a filtering circuit; the voltage detection circuit comprises a first resistor, a second resistor and a third resistor; the voltage stabilization circuit comprises a Zener diode; and the filtering circuit comprises a fourth resistor and a first capacitor;
wherein a first terminal of the first resistor is connected to a first terminal of the main control module (5), a second terminal of the first resistor is separately connected to a first terminal of the second resistor, a first electrode of the Zener diode and a first terminal of the third resistor, a second terminal of the second resistor is connected to a second terminal of the main control module (5), a second electrode of the Zener diode is grounded, a second terminal of the third resistor is separately connected to a first terminal of the fourth resistor and a first terminal of the first capacitor, the first terminal of the first capacitor is further connected to the switch module (3), and a second terminal of the fourth resistor and a second terminal of the first capacitor are each grounded.

3. The water ingress detection circuit according to claim 1, wherein the switch module (3) comprises a first switch transistor, wherein
a control electrode of the first switch transistor is connected to a third terminal of the main control module (5), a first electrode of the first switch transistor is connected to the waterproof detection terminal (1), and a second electrode of the first switch transistor is connected to the waterproof detection module (2).

4. The water ingress detection circuit according to claim 1, further comprising a state indication module and a detection control module, wherein
the state indication module is connected between a power supply and the main control module (5), and the detection control module is connected between the state indication module and the main control module (5); and
the main control module (5) is further configured to control a state of the state indication module after receiving a detection signal output by the detection control module; the state indication module is configured to indicate a water ingress state of the batter pack in response to a control signal of the main control module (5).

5. The water ingress detection circuit according to claim 4, wherein the state indication module comprises a first light-emitting diode, a second light-emitting diode and a third light-emitting diode; the detection control module comprises a button; wherein
a first electrode of the first light-emitting diode, a first electrode of the second light-emitting diode, a first electrode of the third light-emitting diode and a first terminal of the button are each connected to the power supply, the first terminal of the button is further connected to a seventh terminal of the main control module (5), a second terminal of the button is grounded, a second electrode of the first light-emitting diode is connected to a fourth terminal of the main control module (5), a second electrode of the second light-emitting diode is connected to a fifth terminal of the main control module (5), and a second electrode of the third light-emitting diode is connected to a sixth terminal of the main control module (5).

6. The water ingress detection circuit according to claim 1, wherein the wake-up module (4) comprises a second switch transistor, a fifth resistor, a sixth resistor, a seventh resistor and an eighth resistor; wherein
a control electrode of the second switch transistor is connected to a first terminal of the fifth resistor, a second terminal of the fifth resistor is connected to an eighth terminal of the main control module (5), a first electrode of the second switch transistor is connected to a first terminal of the sixth resistor, a second electrode of the second switch transistor is connected to a first terminal of the seventh resistor and a first terminal of the eighth resistor, a second terminal of the sixth resistor is connected to the first electrode or the second electrode of the battery pack, a second terminal of the seventh resistor is connected to a ninth terminal of the main control module (5), and a second terminal of the eighth resistor is grounded.

7. The water ingress detection circuit according to claim 1, wherein the waterproof detection terminal (1) is disposed outside the battery pack, and the output circuit of the battery pack comprises a discharging module; the water ingress detection circuit further comprises a front-end detection module and a battery set; the discharging module comprises a third switch transistor; wherein
the battery set and the third switch transistor are connected in series and connected in series between the first electrode and the second electrode of the battery pack; the front-end detection module is connected to cell units of the battery set and is connected to a control electrode of the third switch transistor; the discharging module is configured to be disconnected in response to a control signal output by the main control module (5) according to the second water ingress signal at the waterproof detection terminal (1); the front-end detection module is configured to detect voltages of cells and transmit the voltages to the main control module (5).

8. A water ingress detection method, applied to the water ingress detection circuit according to any one of claims 1 to 3 and 6 to 7, comprising:
after detecting the second water ingress signal, controlling the switch module (3) to be turned on every first preset time until a number of times of turning on the switch module (3) reaches a first preset number of times or no second water ingress signal is detected; and
if the number of times of turning on the switch module (3) reaches the first preset number of times, and the second water ingress signal is detected, controlling the switch module (3) to be turned on every second preset time, and recounting the number of times of turning on the switch module (3) until the number of times of turning on the switch module (3) reaches a second preset number of times or no second water ingress signal is detected, wherein the first preset number of times is larger than the second preset number of times, and the first preset time is shorter than the second preset time.

9. The water ingress method according to claim 8, further comprising:
if the number of times of turning on the switch module (3) reaches the second preset number of times, and the second water ingress signal is detected, controlling the switch module (3) to be turned on every third preset time, recounting the number of times of turning on the switch module (3) until the number of times of turning on the switch module (3) reaches a third preset number of times or no second water ingress signal is detected, and controlling the switch module (3) and the discharging module of the output circuit of the battery pack to be locked.

10. The water ingress method according to claim 8 or 9, wherein the water ingress detection circuit further comprises a state indication module and a detection control module; the detection control module comprises a button;
the state indication module is connected between a power supply and the main control module (5), and the detection control module is connected between the state indication module and the main control module (5); and
the main control module (5) is further configured to control a state of the state indication module after receiving a detection signal output by the detection control module; the state indication module is configured to indicate a water ingress state of the batter pack in response to a control signal of the main control module (5); and
the water ingress detection method further comprises:
in response to detecting the second water ingress signal, controlling the state indication module to flash;
after detecting that the button is pressed, if detecting the second water ingress signal, controlling the switch module (3) and the discharging module of the output circuit of the battery pack to be locked; or
after detecting that the button is pressed, if detecting no second water ingress signal, controlling the state indication module to stop flashing.
